# EUROPÄISCHE PATENTSCHRIFT

(11) **EP 1 880 890 B1**
(45) Veröffentlichungstag und Bekanntmachung des Hinweises auf die Patenterteilung: **07.10.2009**
(21) Anmeldenummer: 07110329.5
(22) Anmeldetag: 15.06.2007
(51) Int. Cl.: B60K 37/02, B60Q 3/04, F21S 8/00

(54) **Anzeigevorrichtung**
Display device
Dispositif d'affichage

(30) Priorität: 20.07.2006 DE 102006033640; 29.09.2006 DE 102006046405
(43) Veröffentlichungstag der Anmeldung: 23.01.2008
(73) Patentinhaber: ROBERT BOSCH GMBH, 70442 Stuttgart (DE)
(72) Erfinder: Schach, Harald, 71287, Weissach (DE); Vogt, Thomas, 71640, Ludwigsburg (DE); Herzog, Bernhard, 70619, Stuttgart (DE); Bohse, Holger, 71229, Leonberg (DE)

(56) Entgegenhaltungen:
- EP-A- 0 785 416
- DE-A1- 10 026 860
- FR-A- 2 679 998

## Beschreibung

### Stand der Technik

Die Erfindung bezieht sich auf eine Anzeigevorrichtung für ein Kraftfahrzeug, mit zwei in verschiedenen Ebenen schwenkbeweglich angeordneten Zeigern, wobei zwischen einem vorderen Zeiger und einem hinteren Zeiger zumindest ein Ziffernblatt angeordnet ist derart, dass der hintere Zeiger von dem Ziffernblatt zumindest abschnittsweise abgedeckt ist, und die Anzeigevorrichtung eine dem hinteren Zeiger zugeordnete Lichtquelle aufweist.

Eine derartige Anzeigevorrichtung wird insbesondere in einem Kombiinstrument eines Kraftfahrzeuges zur Darstellung der Fahrgeschwindigkeit, d. h. als Tachometer-Anzeige verwendet. Hierbei ist ein vorderer Zeiger drehbar vor einem Ziffernblatt gelagert, das einen mit einer Skalierung versehenen Anzeigebereich aufweist, so dass aufgrund der Auslenkung des vorderen Zeigers der jeweilige Wert des Anzeigebereichs markiert wird.

Zusätzlich zu der jeweiligen Fahrgeschwindigkeit ist oftmals eine Anzeige eines durch eine Tempomatfunktion oder Limiterfunktion bestimmten Werts gewünscht. Bei einer Tempomatfunktion wird von dem Fahrer ein Sollwert der Geschwindigkeit eingestellt, der von einer Regeleinrichtung, beispielsweise über die Motorsteuerung, jeweils gehalten wird, bis ein anderer Wert eingestellt wird oder das Gaspedal oder das Bremspedal betätigt wird. Bei einer Limiterfunktion wird eine Maximalgeschwindigkeit des Fahrzeugs vorgegeben, wobei eine Regeleinrichtung, beispielsweise das Motorsteuergerät, bei höheren Geschwindigkeiten abregelt. Eine derartige Limiterfunktion kann in einem Kraftfahrzeug auch fest vorprogrammiert sein.

Zum Teil wird hierbei eine Anzeige des eingestellten Geschwindigkeitswertes der Tempomatfunktion oder Limiterfunktion in der Tachometeranzeige zusammen mit der jeweiligen Fahrgeschwindigkeit gewünscht. Eine derartige Anzeige des jeweils eingestellten Geschwindigkeitswertes kann beispielsweise über einen zweiten, koaxialen Zeiger, der hierzu in einer zweiten Ebene schwenkbeweglich ist, erfolgen.

Eine gattungsgemäße Anzeigevorrichtung für ein Kraftfahrzeug zeigt beispielsweise die DE 100 26 860 A1, die mit einem in einer axialen Richtung hinter dem vorderen Zeiger angeordneten vorderen Ziffernblatt mit einem vorderen Anzeigebereich, einem axial hinter dem vorderen Ziffernblatt angeordneten, drehbaren hinteren Zeiger, und einem axial hinter dem hinteren Zeiger angeordneten hinteren Ziffernblatt mit einem hinteren Anzeigebereich ausgestattet ist. Dabei überlappen sich die beiden Anzeigebereiche zumindest abschnittsweise radial. Dadurch wird eine Darstellung sowohl der Fahrgeschwindigkeit als auch des eingestellten Geschwindigkeitswertes über zwei Zeiger und zwei Ziffernblätter gewährleistet.

Weiterhin offenbart die EP 07 85 416 A1 eine für ein Kraftfahrzeug bestimmte Anzeigevorrichtung mit einem über ein Ziffernblatt schwenkbeweglichen Zeiger und einen Stellmotor. Eine auf eine Platine angeordnete Leuchtdiode strahlt in einen einen hinteren Zeiger bildenden u-förmigen Lichtleiter ein, welcher rückseitig an der Welle eines Stellmotors angeordnet ist und bis zu einer bogenförmigen Deckscheibe im Ziffernblatt geführt ist.

In der Praxis hat sich jedoch die Entkopplung des Lichts in den hinteren Zeiger aufgrund des damit verbundenen Lichtverlustes als nachteilig erwiesen. Insbesondere reicht die Ablesbarkeit, insbesondere bei Reflexen des Sonnenlichts oder einer Straßenbeleuchtung oftmals nicht aus.

Durch die EP 07 85 416 A1 ist auch bereits bekannt, zur Anzeige der Sollwertmarkierung eine unbewegliche Laserkanone einzusetzen. Mittels des Stellmotors wird ein Spiegel geschwenkt, so dass ein Laserstrahl über einen bogenförmigen Spiegel in eine vorgesehene Position in einem bogenförmigen Spalt im Ziffernblatt ausgelenkt wird.

### Offenbarung der Erfindung

### Vorteile der Erfindung

Die erfindungsgemäße Anzeigevorrichtung, bei der die Lichtquelle an dem hinteren Zeiger an dessen äußeren Endabschnitt angeordnet ist und in ein optischen Element der Anzeigevorrichtung einstrahlt, das im Strahlengang des von der Lichtquelle emittierten Lichtes angeordnet ist und das, einen auf der Darstellungsfläche dargestellten konturierten Lichtfleck begrenztwobei die Darstellungsfläche eine zu einer Schwenkachse der Zeiger zumindest abschnittsweise konzentrische, bogenförmige Kontur hat, hat demgegenüber den Vorteil, dass die Ablesbarkeit einer der hinteren Zeigerstellung entsprechenden Anzeige wesentlich verbessert ist, weil die dabei auftretenden Lichtverluste auf ein Minimum reduziert werden. Insbesondere wird also mit relativ geringem Aufwand eine gute Wiedergabe und Ablesbarkeit der beiden Zeigerdarstellungen gewährleistet. Zugleich ist die Zeigerform unabhängig von dem gewünschten Lichtfleck, der beispielsweise auch ein Lichtsymbol bilden kann, weil dessen Kontur lediglich durch die Lichtquelle und das optische Element, nicht aber durch den Zeigerquerschnitt bestimmt ist. Der Zeiger kann demnach beispielsweise auch als eine ebene oder konkave Kreisscheibe ausgeführt oder mit einem der Lichtquelle entsprechenden Ausgleichsgewicht ausgestattet sein. Im Vergleich zu einer aus dem Stand der Technik bekannten Laserquelle entfällt eine bewegliche Spiegelanordnung, so dass sich zugleich eine vergleichsweise kostengünstige Bauform realisieren lässt. Ferner kann der Lichtfleck mittels des optischen Elementes derart variabel formbar sein, dass dieser beispielsweise in Abhängigkeit der Winkelstellung des hinteren Zeigers eine wechselnde Kontur abbildet.

Durch die in den abhängigen Ansprüchen aufgeführten Maßnahmen sind vorteilhafte Weiterbildungen und Verbesserungen der im unabhängigen Anspruch angegebenen Erfindung möglich. Beispielsweise könnte das der Strahlformung dienende optische Element als ein unbewegliches Bauelement der Anzeigevorrichtung ausgeführt sein und beispielsweise den hinteren Zeiger konzentrisch einschließen. Besonders vorteilhaft ist hingegen eine Abwandlung der vorliegenden Erfindung, bei welcher das optische Element an dem Zeiger angeordnet ist. Hierdurch wird in einfacher Weise der konturierte Lichtfleck für den Betrachter beispielsweise durch eine als Abdeckglas ausgeführte transmissive oder transluzente Abdeckung hindurch sichtbar, so dass die mit der Einkopplung in weitere Lichtleitelemente verbundenen Verluste weitgehend vermieden werden können. Der aus dem optischen Element austretende Strahlengang kann dabei beispielsweise in axialer Richtung in Bezug auf die Schwenkachse des Zeigers gerichtet sein.

Dabei erweist es sich als besonders einfach, wenn das optische Element eine Blende, insbesondere Spaltblende hat, durch die eine scharfe Abgrenzung des Lichtflecks gegenüber den unbeleuchteten Bereichen des Ziffernblattes oder der Abdeckung des Darstellungsfeldes für den hinteren Zeiger erreicht wird. Die Blende kann außerdem bereits entsprechend der Außenkontur eines sinnfälligen Symbols oder einfacher geometrischer Figuren geformt sein. Selbstverständlich ist es auch möglich, die Blende, die an dem hinteren Zeiger angeordnet ist, durch eine weitere unbewegliche Blende zu überlagern, um so während der Schwenkbewegung wechselnde Darstellungsformen des Lichtflecks zu erzeugen.

Eine andere ebenfalls besonders vorteilhafte Ausgestaltung der vorliegenden Erfindung wird dadurch erreicht, dass das optische Element eine Linse hat. Hierdurch wird beispielsweise eine Fokussierung des von der Lichtquelle abgestrahlten Lichtes erreicht, um so eine für den Betrachter unter allen Umfeldbedingungen optimale Ablesbarkeit zu gewährleisten.

Das Ziffernblatt könnte eine einheitliche Skalierung für beide Zeiger aufweisen. Weiterhin könnte das von der Lichtquelle abgestrahlte Licht durch das hierzu transmissive Ziffernblatt hindurch sichtbar werden und beispielsweise eine Zahl oder einen Bereich der Skalierung optisch hervorheben. Besonders zweckmäßig ist es hingegen, wenn das Ziffernblatt eine Darstellungsfläche für den hinteren Zeiger aufweist, die für den Betrachter eine optimale Ablesbarkeit und zugleich eine eindeutige Zuordnung gestattet. Die Darstellungsfläche kann dabei beispielsweise lediglich ein Feld begrenzen, so dass die dem vorderen Zeiger zugeordnete Skalierung zugleich für den hinteren Zeiger Verwendung findet oder aber mit einer separaten Skalierung verbunden sein.

Die Darstellungsfläche kann eine nahezu beliebige Form aufweisen. Beispielsweise kann die Breite mit zunehmender Winkelstellung des hinteren Zeigers variieren. Besonders sinnvoll ist hingegen eine erfindungsgemäße Weiterbildung, bei welcher die Darstellungsfläche eine zu der Schwenkachse zumindest abschnittsweise konzentrische, bogenförmige Kontur hat und somit eine unmittelbar eindeutige Zuordnung zu der Schwenkbewegung des Zeigers gestattet.

Die Darstellungsfläche des hinteren Zeigers könnte gegenüber der Darstellungsfläche des vorderen Zeigers hervorgehoben oder zurückgesetzt angeordnet sein. Besonders zweckmäßig ist demgegenüber jedoch eine Abwandlung, bei welcher die Darstellungsfläche in einer mit dem Ziffernblatt gemeinsamen Ebene angeordnet ist, um so den unmittelbaren Zusammenhang der durch die beiden Zeiger dargestellten Informationsgehalte visuell hervor zu heben.

Besonders sinnvoll ist auch eine weitere Ausgestaltung der vorliegenden Erfindung, bei welcher der Darstellungsfläche ein Lichtleitelement der Anzeigevorrichtung zugeordnet ist, welches insbesondere der Vermeidung von Lichtverlusten zwischen der Ebene des hinteren Zeigers und der Ebene des Ziffernblattes dient. Zugleich sind die Eigenschaften des Lichtleitelements derart bestimmt, dass die Kontur des hinteren Zeigers für den Betrachter im Gegensatz zu dem Lichtfleck nicht wahrgenommen wird.

Hierzu weist nach einer weiteren Ausgestaltung das Lichtleitelement eine Einkoppelfläche für das von der Lichtquelle des hinteren Zeigers eingekoppelte Licht auf. Das von der Lichtquelle emittierte Licht wird dabei wahlweise bereits in axialer Richtung, also parallel zur Schwenkachse des Zeigers oder aber radial hierzu in das Lichtleitelement eingekoppelt.

Dabei erweist es sich als besonders sinnvoll, wenn gemäß einer Abwandlung der erfindungsgemäßen Anzeigevorrichtung das Lichtleitelement zur insbesondere radialen Lichteinkopplung eine Lichtumlenkfläche aufweist. Die Lichtumlenkfläche weist hierzu insbesondere eine Reflexionsfläche auf, durch die das von der Lichtquelle emittierte Licht der Darstellungsfläche zugeführt wird, die zugleich als ein Bestandteil des Lichtleitelements ausgeführt sein kann.

Auf diese Weise kann auch eine vorteilhafte Weiterbildung realisiert werden, bei der das Lichtleitelement eine weitere Einkoppelfläche für eine flächige Hintergrundbeleuchtung hat, welche von der Zeigerstellung grundsätzlich unabhängig ist. Bei dieser Bauform wird das von der Lichtquelle emittierte, radial in das Lichtleitelement eingekoppelte Licht an der Reflexionsfläche total reflektiert, während das von der Hintergrundbeleuchtung in das Lichtleitelement axial eingekoppelte Licht durch dieselbe Reflexionsfläche rückseitig nahezu ungehindert hindurch tritt und den Lichtfleck hinterlegt.

Beispielsweise kann das Lichtleitelement als ein Kreisring oder ein Kreisringsektor ausgeführt sein und so das Ziffernblatt außenseitig konzentrisch einschließen, so dass das äußere Erscheinungsbild der Anzeigevorrichtung weiter verbessert wird.

Als Lichtquelle kann grundsätzlich jede beliebige, insbesondere auch handelsübliche Lichtquelle, eingesetzt werden, besonders praxisgerecht ist es hingegen, wenn die Lichtquelle eine LED aufweist, die sich insbesondere durch eine hohe Lebensdauer bei geringem Energieverbrauch und geringer Wärmeabgabe auszeichnet.

Die erforderliche Kontaktierung der Lichtquelle könnte mittels entsprechender Schleifkontakte realisiert sein. Besonders sinnvoll ist es hingegen, wenn die Lichtquelle mittels einer flexiblen Leiterbahn mit einer elektrischen Energieversorgung verbunden ist, die sich hierzu entsprechend der Winkelstellung des Zeigers von der Achse abwickelt oder sich auf diese aufwickelt. Anstelle einer einzigen Lichtquelle können auch mehrere Lichtquellen, bevorzugt mit unterschiedlichen Farben, beispielsweise als Mehrfarb-LED, verwendet werden, um so eine Unterscheidbarkeit einer Tempomatfunktion und einer Limiterfunktion herbeizuführen.

### Kurze Beschreibung der Zeichnung

Ein Ausführungsbeispiel der Erfindung ist in der Zeichnung dargestellt und in der nachfolgenden Beschreibung näher erläutert.

Es zeigen
- Figur 1: eine Anzeigevorrichtung in einer perspektivischen Darstellung,
- Figur 2: eine geschnittene Seitenansicht der in Figur 1 gezeigten Anzeigevorrichtung,
- Figur 3: eine Detailansicht zu der in Figur 2 gezeigten Seitenansicht,
- Figur 4: eine geschnittene Seitenansicht einer weiteren Anzeigevorrichtung mit einer axialen Lichtabstrahlung,
- Figur 5: eine geschnittene Seitenansicht einer weiteren Anzeigevorrichtung mit zwei Spaltblenden und
- Figur 6: eine geschnittene Seitenansicht einer weiteren Anzeigevorrichtung mit einer Kollimationsoptik.

### Ausführungsformen der Erfindung

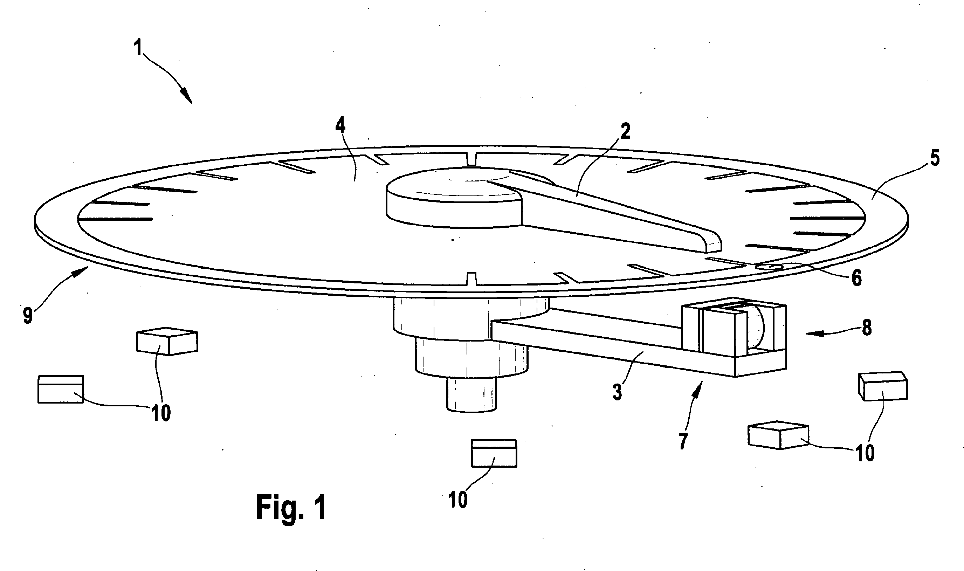

In der Figur 1 ist eine Anzeigevorrichtung 1 für ein nicht dargestelltes Kraftfahrzeug in einer perspektivischen Ansicht gezeigt. Die Anzeigevorrichtung 1 hat zwei in parallelen Ebenen schwenkbeweglich angeordnete Zeiger 2, 3, denen ein gemeinsames Ziffernblatt 4 zugeordnet ist. Hierzu ist der hintere Zeiger 3 von dem kreisförmigen Ziffernblatt 4 abschnittsweise überdeckt und daher für den Betrachter nur im Bereich einer kreisringförmigen Darstellungsfläche 5 sichtbar. Zur Darstellung eines als Lichtsymbol ausgeführten, konturierten Lichtflecks 6 trägt der hintere Zeiger 3 an seinem äußeren Endabschnitt 7 eine Lichtquelle 8, welche rückseitig in ein mit der Darstellungsfläche 5 verbundenen Lichtleitelement 9 einstrahlt. Weitere Lichtquellen 10 dienen der Hintergrundbeleuchtung der Darstellungsfläche 5 und sind von der Zeigerstellung des Zeigers 3 unabhängig.

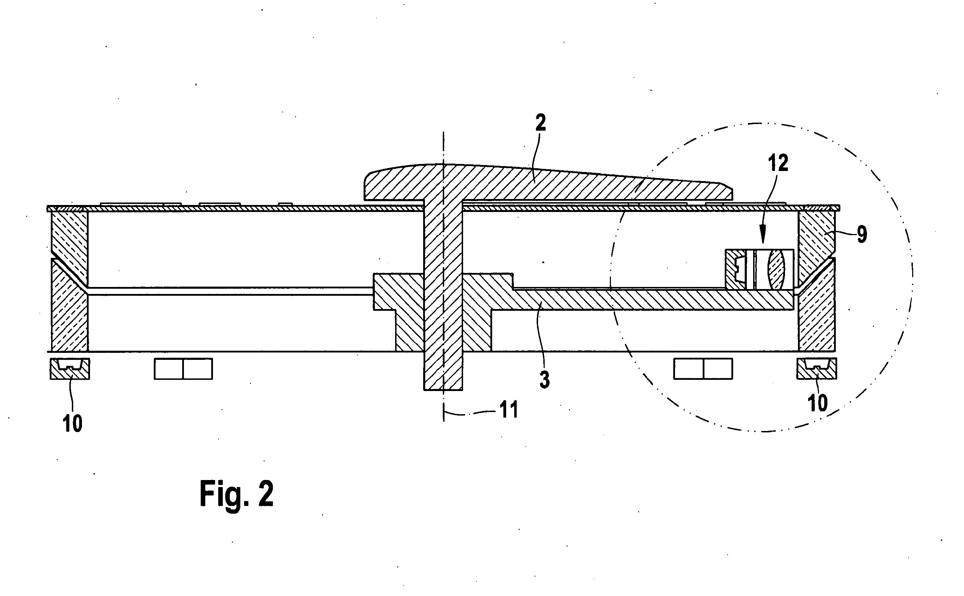

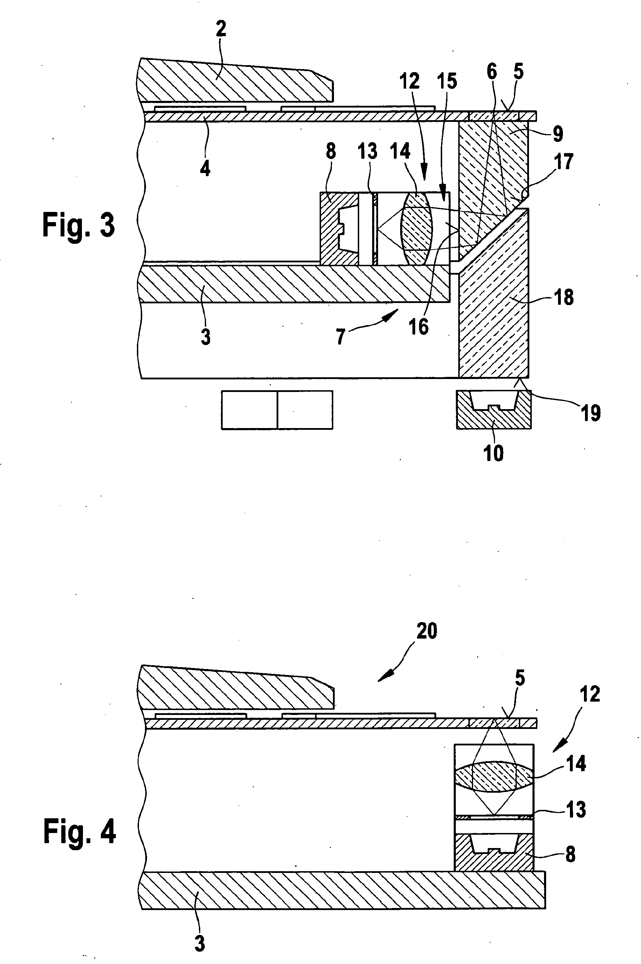

Der konstruktive Aufbau der Anzeigevorrichtung 1 wird anhand der Figuren 2 und 3 näher dargestellt, die eine geschnittene Seitenansicht der in Figur 1 gezeigten Anzeigevorrichtung 1 sowie eine Detailansicht daraus zeigen. Zu erkennen ist der um einen vorderen Zeiger 2 konzentrisch angeordnete und um eine gemeinsame Schwenkachse 11 auslenkbare hintere Zeiger 3. Dieser trägt an seinem äußeren radialen Endabschnitt 7 die in radialer Richtung abstrahlende Lichtquelle 8, die in ein ebenfalls an dem Zeiger 3 fixiertes optisches Element 12 einstrahlt. Hierbei tritt das Licht zunächst durch eine den Lichtfleck 6 formende, als Spaltblende ausgeführte Blende 13 und anschließend durch eine als Fokussierlinse ausgeführte Linse 14 des optischen Elementes 12. Mittels einer im Strahlengang 15 des Lichtes angeordneten Einkoppelfläche 16 wird das Licht in das den hinteren Zeiger 3 ringförmig einschließenden, ortsfesten Lichtleitelement 9 eingekoppelt und an einer, als eine Totalreflexionsfläche ausgeführten Lichtumlenkfläche 17 des Lichtleitelements 9 rückseitig auf die in Figur 1 gezeigte Darstellungsfläche 5 fokussiert. Ein zweites Lichtleitelement 18 dient der Einkopplung des von den Lichtquellen 10 abgestrahlten und mittels einer zweiten Lichteinkoppelfläche 19 eingekoppelten Lichtes in axialer Richtung durch die Lichtumlenkfläche 17 hindurch zur flächigen Hintergrundbeleuchtung der in einer gemeinsamen Ebene mit dem Ziffernblatt 4 angeordneten Darstellungsfläche 5.

Demgegenüber ist in der Figur 4 eine weitere Anzeigevorrichtung 20 in einer geschnittenen Seitenansicht abschnittsweise dargestellt. Im Gegensatz zu der in den Figuren 1 bis 3 gezeigten Anzeigevorrichtung 1 strahlt die als LED ausgeführte Lichtquelle 8 das Licht nicht in radialer Richtung, sondern in Bezug auf den Zeiger 3 in axialer Richtung ab, so dass diese Anzeigevorrichtung 20 ohne ein zusätzliches Lichtleitelement realisiert werden kann. Vielmehr wird das Licht nach dem Durchtritt durch das optische Element 12 umfassend die Lichtquelle 8, die Blende 13 und die Linse 14 ohne weitere Umlenkung unmittelbar rückseitig auf die Darstellungsfläche 5 fokussiert.

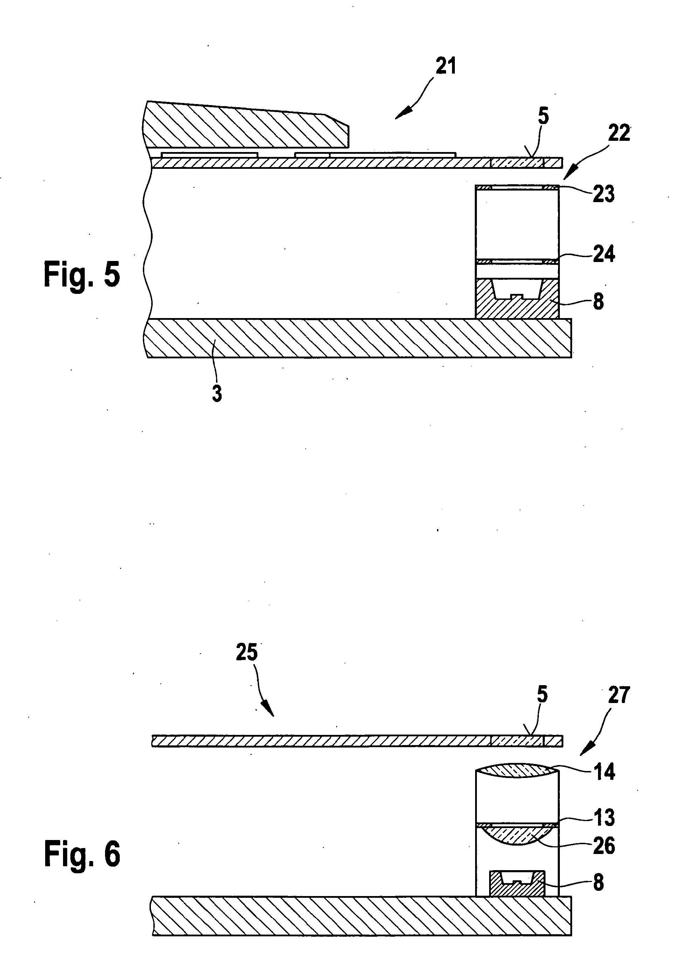

Bei einer in der Figur 5 gezeigten Ausführungsform einer weiteren, in einer geschnittenen Seitenansicht abschnittsweise dargestellten Anzeigevorrichtung 21 erfolgt entsprechend der in Figur 4 gezeigten Anzeigevorrichtung 20 die unmittelbare rückseitige Fokussierung auf die Darstellungsfläche 5 in axialer Richtung. In Abwandlung hierzu dient jedoch ein an dem Zeiger 3 angeordnetes, vereinfachtes optisches Element 22 mit zwei parallelen, als Spaltblenden ausgeführten Blenden 23, 24 der Strahlformung, durch welche das von der Lichtquelle 8 abgestrahlte Licht zum Zweck hindurch tritt.

Eine weitere, demgegenüber abgewandelte Anzeigevorrichtung 25 mit einer Kollimationsoptik 26 ist in Figur 6 in einer geschnittenen Seitenansicht dargestellt. In Übereinstimmung mit der in der Figur 4 gezeigten Ausführungsform weist die Anzeigevorrichtung 25 ein optisches Element 27 umfassend die Lichtquelle 8, die Blende 13 und die Linse 14 auf, die in axialer Richtung das von der Lichtquelle 8 emittierte Licht rückseitig auf die Darstellungsfläche 5 fokussiert. Ergänzend ist jedoch im Strahlengang vor der Blende 13 die Kollimationsoptik 26 zur Verbesserung der Lichtverteilung in dem auf der Darstellungsfläche 5 darzustellenden Lichtflecks angeordnet, wobei die Blende 13 hierzu beispielsweise einstückig mit der Kollimationsoptik 26 verbunden sein kann, indem die Blende 13 auf die Kollimationsoptik 26 aufgedruckt ist.

Selbstverständlich ist die Erfindung nicht auf eine in den Anzeigevorrichtungen eingesetzte Linse als ein separates Bauelement beschränkt. Vielmehr kann die Linse auch als ein integraler Bestandteil der hierzu beispielsweise als LED ausgeführten Lichtquelle ausgeführt sein.

## Patentansprüche

1. Anzeigevorrichtung (1, 20, 21, 25) für ein Kraftfahrzeug, mit zwei in verschiedenen Ebenen schwenkbeweglich angeordneten Zeigern (2, 3), wobei zwischen einem vorderen Zeiger (2) und einem hinteren Zeiger (3) zumindest ein Ziffernblatt (4) derart angeordnet ist, dass der hintere Zeiger (3) von dem Ziffernblatt (4) zumindest abschnittsweise abgedeckt ist, wobei die Anzeigevorrichtung (1, 20, 21, 25) eine dem hinteren Zeiger (3) zugeordnete Lichtquelle (8) aufweist und wobei das Ziffernblatt (4) eine Darstellungsfläche (5) für den hinteren Zeiger (3) aufweist, **dadurch gekennzeichnet, dass** die Lichtquelle (8) an dem hinteren Zeiger (3) an dessen äußeren Endabschnitt (7) angeordnet ist und in ein optisches Element (12, 22, 27) der Anzeigevorrichtung (1, 20, 21, 25) einstrahlt, das im Strahlengang (15) des von der Lichtquelle (8) emittierten Lichtes angeordnet ist und das einen auf der Darstellungsfläche (5) dargestellten konturierten Lichtfleck (6) begrenzt, wobei die Darstellungsfläche (5) eine zu einer Schwenkachse (11) der Zeiger (2, 3) zumindest abschnittsweise konzentrische, bogenförmigen Kontur hat.

2. Anzeigevorrichtung (1, 20, 21, 25) nach einem der vorhergehenden Ansprüche, **dadurch gekennzeichnet, dass** das optische Element (12, 22, 27) an dem hinteren Zeiger (3) angeordnet ist.

3. Anzeigevorrichtung (1, 20, 21, 25) nach einem der vorhergehenden Ansprüche, **dadurch gekennzeichnet, dass** das optische Element (12, 22, 27) eine Blende (13, 23, 24), hat.

4. Anzeigevorrichtung (1, 20, 25) nach mindestens einem der vorhergehenden Ansprüche, **dadurch gekennzeichnet, dass** das optische Element (12, 27) eine Linse (14) hat.

5. Anzeigevorrichtung (1, 20, 21, 25) nach einem der vorhergehenden Ansprüche, **dadurch gekennzeichnet, dass** die Darstellungsfläche (5) in einer mit dem Ziffernblatt (4) gemeinsamen Ebene angeordnet ist.

6. Anzeigevorrichtung (1) nach einem der vorhergehenden Ansprüche, **dadurch gekennzeichnet, dass** der Darstellungsfläche (5) ein Lichtleitelement (9) der Anzeigevorrichtung (1) zugeordnet ist.

7. Anzeigevorrichtung (1) nach Anspruch 6, **dadurch gekennzeichnet, dass** das Lichtleitelement (9) eine Einkoppelfläche (9) für das von der Lichtquelle (8) des hinteren Zeigers (3) eingekoppelte Licht aufweist.

8. Anzeigevorrichtung (1) nach Anspruch 6 oder 7, **dadurch gekennzeichnet, dass** das Lichtleitelement (9) zur Lichteinkopplung eine Lichtumlenkfläche (17) aufweist.

9. Anzeigevorrichtung (1) nach einem der Ansprüche 6 bis 8, **dadurch gekennzeichnet, dass** das Lichtleitelement (18) eine Einkoppelfläche (19) für eine flächige Hintergrundbeleuchtung hat.

10. Anzeigevorrichtung (1) nach einem der Ansprüche 6 bis 9, **dadurch gekennzeichnet, dass** das Lichtleitelement (9) als ein Kreisring oder ein Kreisringsektor davon ausgeführt ist.

11. Anzeigevorrichtung (1, 20, 21, 25) nach mindestens einem der vorhergehenden Ansprüche, **dadurch gekennzeichnet, dass** die Lichtquelle (8) eine LED aufweist.

12. Anzeigevorrichtung (1, 20, 21, 25) nach mindestens einem der vorhergehenden Ansprüche, **dadurch gekennzeichnet, dass** die Lichtquelle (8) mittels einer flexiblen Leiterbahn mit einer elektrischen Energieversorgung verbunden ist.

## Claims

1. Display device (1, 20, 21, 25) for a motor vehicle, having two pointers (2, 3) pivotably arranged in different planes, at least one dial (4) being arranged between a front pointer (2) and a rear pointer (3) in such a way that the rear pointer (3) is covered at least in sections by the dial (4), the display device (1, 20, 21, 25) having a light source (8) assigned to the rear pointer (3), and the dial (4) having a display surface (5) for the rear pointer (3), **characterized in that** the light source (8) is arranged on the rear pointer (3) at its outer end section (7), and radiates into an optical element (12, 22, 27) of the display device (1, 20, 21, 25), which element is arranged in the beam path (15) of the light emitted by the light source (8) and which delimits a contoured light spot (6) displayed on the display surface (5), the display surface (5) having an arcuate contour which is concentric at least in some sections with a pivoting axis (11) of the pointers (2, 3).

2. Display device (1, 20, 21, 25) according to the preceding claim, **characterized in that** the optical element (12, 22, 27) is arranged on the rear pointer (3).

3. Display device (1, 20, 21, 25) according to one of the preceding claims, **characterized in that** the optical element (12, 22, 27) has a diaphragm (13, 23, 24).

4. Display device (1, 20, 25) according to at least one of the preceding claims, **characterized in that** the optical element (12, 27) has a lens (14).

5. Display device (1, 20, 21, 25) according to one of the preceding claims, **characterized in that** the display surface (5) is arranged in a common plane with the dial (4).

6. Display device (1) according to one of the preceding claims, **characterized in that** the display surface (5) is assigned a light-guiding element (9) of the display device (1).

7. Display device (1) according to Claim 6, **characterized in that** the light-guiding element (9) has a coupling surface (19) for the light coupled in from the light source (8) of the rear pointer (3).

8. Display device (1) according to Claim 6 or 7, **characterized in that** the light-guiding element (9) has a light-deflecting surface (17) for coupling in light.

9. Display device (1) according to one of Claims 6 to 8, **characterized in that** the light-guiding element (18) has a coupling surface (19) for a flat backlighting.

10. Display device (1) according to one of Claims 6 to 9, **characterized in that** the light-guiding element (9) is designed as a circular ring or a circular ring sector thereof.

11. Display device (1, 20, 21, 25) according to at least one of the preceding claims, **characterized in that** the light source (8) has an LED.

12. Display device (1, 20, 21, 25) according to at least one of the preceding claims, **characterized in that** the light source (8) is connected to an electric power supply by means of a flexible printed conductor.

## Revendications

1. Dispositif d'affichage (1, 20, 21, 25) pour véhicule automobile, qui présente :
des aiguilles (2, 3) disposées à pivotement dans des plans différents, au moins un cadran chiffré (4) étant disposé entre une aiguille avant (2) et une aiguille arrière (3) de telle sorte que l'aiguille arrière (3) soit recouverte au moins partiellement par le cadran chiffré (4),
le dispositif d'affichage (1, 20, 21, 25) présentant une source de lumière (8) associée à l'aiguille arrière (3) et le cadran chiffré (4) présentant une surface (5) de présentation de l'aiguille arrière (3),
**caractérisé en ce que**
la source de lumière (8) est disposée sur la partie d'extrémité extérieure (7) de l'aiguille arrière (3) et rayonne dans un élément optique (12, 22, 27) du dispositif d'affichage (1, 20, 21, 25), l'élément optique étant disposé dans le parcours (15) des rayons lumineux émis par la source de lumière (8) et délimitant une tache lumineuse (6) à contour défini présentée sur la surface de présentation (5) et
**en ce que** la surface de présentation (5) présente un contour en arc de cercle au moins en partie concentrique par rapport à l'axe de pivotement (11) des aiguilles (2, 3).

2. Dispositif d'affichage (1, 20, 21, 25) selon la revendication précédente, **caractérisé en ce que** l'élément optique (12, 22, 27) est disposé sur l'aiguille arrière (3).

3. Dispositif d'affichage (1, 20, 21, 25) selon l'une des revendications précédentes, **caractérisé en ce que** l'élément optique (12, 22, 27) présente un obturateur (13, 23, 24).

4. Dispositif d'affichage (1, 20, 25) selon au moins l'une des revendications précédentes, **caractérisé en ce que** l'élément optique (12, 27) présente une lentille (14).

5. Dispositif d'affichage (1, 20, 21, 25) selon l'une des revendications précédentes, **caractérisé en ce que** la surface de présentation (5) est disposée dans le même plan que le cadran chiffré (4).

6. Dispositif d'affichage (1) selon l'une des revendications précédentes, **caractérisé en ce qu'**un élément (9) conducteur de lumière du dispositif d'affichage (1) est associé à la surface de présentation (5).

7. Dispositif d'affichage (1) selon la revendication 6, **caractérisé en ce que** l'élément (9) conducteur de lumière présente une surface (19) d'injection de la lumière émise par la source de lumière (8) de l'aiguille arrière (3).

8. Dispositif d'affichage (1) selon les revendications 6 ou 7, **caractérisé en ce que** l'élément (9) conducteur de lumière présente une surface (17) de renvoi de lumière qui assure l'injection de lumière.

9. Dispositif d'affichage (1) selon l'une des revendications 6 à 8, **caractérisé en ce que** l'élément (18) conducteur de lumière présente une surface (19) d'injection d'un éclairage plan d'arrière-plan.

10. Dispositif d'affichage (1) selon l'une des revendications 6 à 9, **caractérisé en ce que** l'élément (9) conducteur de lumière est configuré sous la forme d'un anneau circulaire ou d'un secteur d'anneau circulaire.

11. Dispositif d'affichage (1, 20, 21, 25) selon au moins l'une des revendications précédentes, **caractérisé en ce que** la source de lumière (8) présente une LED.

12. Dispositif d'affichage (1, 20, 21, 25) selon au moins l'une des revendications précédentes, **caractérisé en ce que** la source de lumière (8) est reliée à une alimentation en énergie électrique au moyen d'une piste conductrice souple.
